# EUROPEAN PATENT SPECIFICATION

(11) **EP 2 370 708 B1**
(45) Date of publication and mention of the grant of the patent: **09.01.2013**
(21) Application number: 08876230.7
(22) Date of filing: 28.11.2008
(51) Int. Cl.: F16G 5/16

(54) **METHOD FOR MANUFACTURING A DRIVE BELT, A DRIVE BELT AND A METHOD FOR OPERATING A CONTINUOUSLY VARIABLE TRANSMISSION INCORPORATING SUCH A DRIVE BELT**
VERFAHREN ZUR HERSTELLUNG EINES ANTRIEBSRIEMENS, ANTRIEBSRIEMEN UND VERFAHREN ZUM BETRIEB EINES SOLCH EINEN ANTRIEBSRIEMEN ENTHALTENDEN STUFENLOSEN GETRIEBES
PROCÉDÉ DE FABRICATION D UNE COURROIE DE TRANSMISSION, COURROIE DE TRANSMISSION ET PROCÉDÉ DE COMMANDE D UNE TRANSMISSION À VARIATION CONTINUE COMPRENANT UNE COURROIE DE TRANSMISSION DE CE TYPE

(43) Date of publication of application: 05.10.2011
(73) Proprietor: Robert Bosch GmbH, 70442 Stuttgart (DE)
(72) Inventor: PENNINGS, Bert, NL-5052 CH Goirle (NL); FARAON, Irinel Cosmin, NL-5056 JL Berkel-Enschot (NL)
(74) Representative: Plevier, Gabriel Anton Johan Maria
(86) International application number: PCT/NL2008/050758
(87) International publication number: WO 2010/062167

(56) References cited:
- EP-A- 1 233 207
- EP-A- 1 531 284
- EP-A- 1 939 487
- JP-A- 61 104 027
- JP-A- 2004 144 231
- US-A1- 2005 187 056

## Description

The present invention relates to the method for manufacturing a drive belt for a continuously variable transmission according to the preamble of the following claim 1, which belt and transmission are well known in the art, for example from the European patents EP-A-0 626 526 and EP-A-1 167 829 respectively.

The known drive belt is of the so-called pushbelt-type that comprises steel transverse elements that are slidingly included in the belt relative to the circumference of an endless, i.e. annular, tensile means thereof that has the primary function of confining and guiding the transverse elements. The transverse elements of the known belt are made of the carbon containing steel 75Cr1 that includes more than 0.7 up to 0.8 % by weight carbon and between 0.35 and 0.55 % by weight chromium. Typically, the endless tensile means is composed of two sets of a number a mutually nested, i.e. radially stacked flat and thin metal rings or bands.

The known transmission comprises two pulleys, each provided with two predominantly conically-shaped discs. In the transmission a torque is transferred from one pulley to the other by clamping the belt between conical steel discs of the respective pulleys under the influence of respective clamping forces, for which purpose at least one disc of the pulley is included axially moveable by means of an actuator. The said transfer of torque is realized by frictionally transferring a rotational movement of a driving pulley to the belt, of which the transverse elements are provided with axial contact areas for contacting the discs of the pulley. At the other, i.e. driven pulley, the force underlying said rotational movement of the driving pulley is frictionally transferred from said belt to the discs of the driven pulley. During operation of the transmission, a lubrication and/or cooling agent, such as a synthetic oil, is continuously provided to the belt and pulleys to remove the heat generated in the frictional contacts there between.

The radius at which the belt runs in each pulley can be changed by changing the clamping force at each pulley relative to one another. The mathematical quotient between such radii represents a so-called geometric ratio of the transmission, whereas a ratio between the rotational speeds of the pulleys represents the speed ratio of the transmission.

As part of the conventional manufacturing method of the belt, an example whereof is provided by the European patent publication EP-A-1 233 207, the steel transverse elements thereof are hardened by means of a conventional process of quench hardening, which process includes the steps of austenitizing, quenching and of tempering. The heat treatment step of tempering is included to reduce brittleness and/or improve the ductility and fatigue properties of the quench hardened steel. As a result of tempering process step also the hardness is reduced as compared to the hardness value immediately after the process step of quenching that amounts to more than 65 HRC up to 68 HRC (Rockwell C-scale hardness), whereas after tempering the hardness of the transverse elements is specified at a value in the range from 58 up to and including 62 HRC.

Since tempering is to be performed at a moderate temperature of around 200 °C, it is a comparatively slow and time-consuming process step. For example in the known quench hardening process of a 75Cr1 steel, the process steps of sufficiently heating the transverse elements steel for transforming the micro-structure of the steel base material from ferrite into austenite, i.e. of austenitizing, and of subsequent rapid cooling for transforming the austenite into martensite, i.e. of quenching, can be performed in a matter of minutes (or even less if induction heating is applied), whereas tempering may take in the order of one or even a couple of hours. Accordingly, the process step of tempering has a considerable limiting impact on the effectiveness and/or efficiency of the overall drive belt manufacturing method. It is, however, considered essential for providing the transverse element with a sufficient toughness, ductility and fatigue resistance, as required by the said drive belt application thereof.

Breaking with the above-described convention, several wear and fatigue tests were performed with quench hardened but not tempered transverse elements and with drive belts incorporating such transverse elements, which tests underlie the present invention. These tests revealed a surprising result, namely that these latter drive belts, in casu the transverse elements thereof, exhibit a fatigue strength that is sufficient for their intended application in the continuously variable transmission after all. Based on this promising result further tests were conducted to determine the conditions that are required therefor.

In its farthest reaching embodiment, the present invention provides for a drive belt manufacturing method wherein the process step of tempering the transverse elements is completely omitted. I.e. the transverse elements are incorporated into the drive belt without being subjected to any further heat treatment. Such a newly assembled drive belt thus incorporating transverse elements having a hardness value of, at least initially, more than 65 HRC and preferably less than 68 HRC.

According to the invention, it was found that the tempering of the steel of the transverse elements occurs during normal use of the novel drive belt in the transmission. Apparently, such tempering in the transmission occurs sufficiently rapidly and to a sufficient extent as a result of the heat that is unavoidably generated in frictional contact between the drive belt and the pulleys during operation. According to the invention it may also be opted to merely shorten the process step of tempering to less than 10 minutes. Tempering is performed at a temperature of between 175 and 225 °C. In this manner a hardness decrease and ductility or fatigue strength increase is realised, without such process step having the major detrimental impact on the duration of the overall transverse element hardening process of the conventionally arranged tempering. In this case, a newly assembled drive belt will incorporate transverse elements having an initial hardness value of more than 62 HRC up to 65 HRC. As before, such novel drive belt relies on the tempering of the steel of the transverse elements that occurs during use thereof, i.e. of the drive belt incorporating such transverse elements, in the transmission.

Preferably, in either one of the above mentioned drive belt manufacturing methods, the said process step of quenching entails the cooling of the transverse elements by means of a medium, whether a liquid (oil) or gaseous (air; nitrogen gas), that has been heated to a temperature of between 75 and 125 °C and preferably of around 100 °C. Moreover, in either one of the above mentioned drive belt manufacturing methods, the said process step of austinitizing is preferably performed in a carbon and/or nitrogen providing atmosphere, such as an atmosphere containing endogas, natural gas, propane, and/or ammonia. In this manner, simultaneous with the said austinitizing, also carbon, nitrogen or carbon and nitrogen atoms will be implanted into a surface layer of the transverse elements, i.e. the process of carbonizing, nitriding or carbo-nitriding will occur simultaneously with the said ausitinitization respectively. In this manner a carbon and/or nitrogen enriched surface layer is created in the transverse elements. Hereby the wear resistance of the transverse elements is improved and the mechanical properties of the transverse elements are generally enhanced thereby, in particular in such a manner that the disadvantage associated with shortening or leaving away altogether the said process step of tempering in accordance with the present invention is alleviated or effectively removed. In particular the said process of carbonizing, nitriding or carbo-nitriding, i.e. the said process step of austinitizing, is performed at between 850 and 1050 °C and preferably lasts for 1 up to 4 hours.

During operation of the transmission incorporating the drive belt according to the present invention, a temperature of a flow of the cooling agent introduced to the drive belt and/or the pulleys is between 75 and 100 °C, preferably between 80 and 95 °C, more preferably is around 90 °C. It was found that at such temperature of the cooling agent, the local temperature in the frictional contact between the drive belt and the pulleys becomes sufficiently high for realising a rapid, but non-excessive tempering of the transverse elements thereof. Very soon after the drive belt, i.e. the transmission incorporating such drive belt, is taken into initial operation the hardness value of the transverse elements has dropped from the initial value to the required value of 62 HRC or less. Thereafter, during the prolonged use of the transmission, or the motor vehicle wherein it is applied, only a limited and altogether acceptable further degradation of the hardness of the transverse elements was found to occur. Such at least in the typical automotive application of the steel pushbelt-type drive belt, i.e. in passenger vehicles.

## Claims

1. Method for manufacturing a drive belt for a continuously variable transmission comprising two pulleys and the drive belt that is reeved around and in frictional contact with such pulleys and that comprises a number of transverse elements provided on an endless tensile means of the belt, whereof the transverse elements are made of a steel that contains more than 0.7 % by weight carbon, in which method the steel transverse elements are hardened by first austenitizing and then quenching the transverse elements, **characterized in that**, after quenching the transverse elements are either incorporated into the drive belt without any further heat treatment or, before being incorporated into the drive belt, are subjected to a further heat treatment of tempering at a temperature of between 175 °C and 225 °C for less than 10 minutes.

2. The manufacturing method according to claim 1, wherein the transverse elements are made of 75Cr1 steel containing between 0.7 and 0.8 % by weight carbon and between 0.35 and 0.55 % by weight chromium.

3. The manufacturing method according to claim 1 or 2, wherein the said process step of quenching entails the cooling of the transverse elements by means of a medium having a temperature of between 75 and 125 °C, preferably of around 100 °C.

4. The manufacturing method according to claim 1, 2 or 3, wherein the said process step of austenitizing is performed in a carbon and/or nitrogen providing atmosphere, such as an atmosphere containing endogas, natural gas, propane, and/or ammonia.

## Patentansprüche

1. Verfahren zur Herstellung eines Antriebsriemens für ein stufenloses Getriebe, das zwei Riemenscheiben umfasst, wobei der Antriebsriemen um solche Riemenscheiben herum geschlungen ist und mit solchen Riemenscheiben in Reibkontakt steht, und das mehrere Querelemente umfasst, die an einem Endloszugmittel des Riemens vorgesehen sind, wobei die Querelemente aus einem Stahl hergestellt sind, der mehr als 0,7 Gew.-% Kohlenstoff enthält, wobei in dem Verfahren die Stahlquerelemente durch zunächst Austenitisieren und dann Abschrecken der Querelemente gehärtet werden, **dadurch gekennzeichnet, dass** die Querelemente nach dem Abschrecken entweder ohne weitere Wärmebehandlung in den Antriebsriemen eingebaut werden oder vor dem Einbau in den Antriebsriemen einer weiteren Wärmebehandlung des Temperns bei einer Temperatur zwischen 175°C und 225°C für weniger als 10 Minuten unterzogen werden.

2. Herstellungsverfahren nach Anspruch 1, wobei die Querelemente aus 75Cr1-Stahl mit 0,7 - 0,8 Gew.-% Kohlenstoff und zwischen 0,35 und 0,55 Gew.-% Chrom bestehen.

3. Herstellungsverfahren nach Anspruch 1 oder 2, wobei der Prozessschritt des Abschreckens das Kühlen der Querelemente mittels eines Mediums mit einer Temperatur zwischen 75 und 125°C, vorzugsweise ca. 100°C, mit sich bringt.

4. Herstellungsverfahren nach Anspruch 1, 2 oder 3, wobei der Prozessschritt des Austenitisierens in einer Kohlenstoff und/oder Stickstoff bereitstellenden Atmosphäre, wie zum Beispiel einer Endogas, Erdgas, Propan und/oder Ammoniak bereitstellenden Atmosphäre, durchgeführt wird.

## Revendications

1. Procédé de fabrication d'une courroie de transmission pour une transmission à variation continue, comprenant deux poulies et la courroie de transmission qui est enroulée autour et se trouve en contact de frottement avec lesdites poulies, et comprenant un certain nombre d'éléments transversaux prévus sur des moyens de tension sans fin de la courroie, dans lequel les éléments transversaux sont constitués d'un acier contenant plus de 0,7 % en poids de carbone, procédé dans lequel les éléments transversaux en acier sont durcis d'abord par austénitisation et ensuite par trempe des éléments transversaux, **caractérisé en ce que**, après la trempe les éléments transversaux sont soit incorporés dans la courroie de transmission sans aucun traitement thermique supplémentaire, soit, avant d'être incorporés dans la courroie de transmission, ils sont soumis à un traitement thermique supplémentaire de revenu à une température qui est comprise entre 175°C et 225°C pendant moins de 10 minutes.

2. Procédé de fabrication selon la revendication 1, dans lequel les éléments transversaux sont constitués d'acier 75Crl contenant entre 0,7 % et 0,8 % en poids de carbone, et entre 0,35 % et 0,55 % en poids de chrome.

3. Procédé de fabrication selon la revendication 1 ou 2, dans lequel ladite étape de traitement de trempe entraîne le refroidissement des éléments transversaux au moyen d'un milieu dont la température est comprise entre 75°C et 125°C, de préférence est égale à environ 100°C.

4. Procédé de fabrication selon la revendication 1, 2 ou 3, dans lequel ladite étape de traitement d'austénitisation est exécutée dans une atmosphère fournissant du carbone et/ou de l'azote, telle qu'une atmosphère contenant un endogaz, du gaz naturel, du propane et/ou de l'ammoniac.
